# EUROPEAN PATENT SPECIFICATION

(11) **EP 4 304 938 B1**
(45) Date of publication and mention of the grant of the patent: **23.10.2024**
(21) Application number: 22709819.1
(22) Date of filing: 09.03.2022
(51) Int. Cl.: B64D 15/00, B64D 15/12, B64D 15/20, B64D 15/22

(54) **ANTI-ICING DEVICE FOR INTAKE OPENING OF THE ENGINE NACELLE FOR TURBOJET OR TURBOFAN ENGINES**
ENTEISUNGSVORRICHTUNG FÜR DIE EINTRITTSÖFFNUNG DER TRIEBWERKSGONDEL FÜR TURBOSTRAHL- ODER TURBOFANTRIEBWERKE
DISPOSITIF D'ANTIGIVRAGE POUR L'OUVERTURE D'ADMISSION DE LA NACELLE RÉACTEUR POUR DES TURBORÉACTEURS OU DES TURBORÉACTEURS À DOUBLE FLUX

(30) Priority: 09.03.2021 IT 202100005525
(43) Date of publication of application: 17.01.2024
(73) Proprietor: Leonardo S.p.a., 00195 Roma (IT)
(72) Inventor: PREMAZZI, Marco, 10146 Torino (IT); NUGNES, Giuseppina, 10146 Torino (IT); ROMANO, Antonio, 10146 Torino (IT)
(74) Representative: Studio Torta S.p.A.
(86) International application number: PCT/IB2022/052101
(87) International publication number: WO 2022/189999

(56) References cited:
- GB-A- 2 511 344
- US-A- 5 322 246
- US-A1- 2016 311 542
- US-A1- 2019 308 737
- US-B2- 8 181 900

## Description

### CROSS-REFERENCE TO RELATED APPLICATIONS

This patent application claims priority from Italian patent application no. 102021000005525 filed on March 9, 2021.

### TECHNICAL FIELD

The present invention relates to an anti-icing device for intake opening of the engine nacelle for turbojet or turbofan engines.

### BACKGROUND OF THE INVENTION

The accumulation of atmospheric ice adversely affects the aerodynamic characteristics of the aircraft, alters the flow rate and regularity of the flow in the air intake of the engines, can occlude the static and dynamic intakes of the altimeters and speed indicators, and, in case of detachment of ice fragments from the air intake and ingestion by the engine, can cause extensive damage to the compressor blades.

Aim of the present invention is to make an anti-icing device for intake opening of the engine nacelle for turbojet or turbofan engines that is electrically powered and with low consumptions.

Prior art document US 8,181,900 discloses first and second Joule effect heater devices.

### SUMMARY OF THE INVENTION

The preceding aim is achieved by the present invention in that it relates to an anti-icing device for intake opening of nacelle engine for turbojet or turbofan engines wherein the intake opening is delimited at the front by a front annular portion formed by a first outer annular wall facing the outside of the nacelle itself and by a second inner annular wall facing the intake opening of the nacelle itself and connected with the first portion through a curved profile, the second inner annular wall being connected by a rear side facing the engine with one peripheral side of a sound-absorbing tubular wall delimiting part of the suction line of the nacelle, **characterised in that** the anti-icing device comprises: - a first Joule effect heater device configured to be coupled to the first outer annular wall, powered by the electric energy present on the aircraft and configured, when powered, to heat the outer surface of the first outer wall causing the ice formed on the first wall to lose its adhesion which is then removed due to kinetic effect by the airflow outside of the nacelle engine or falls by gravity during the aircraft landing operations;- a second Joule effect heater device configured to be coupled to the second inner annular wall, powered by the electric energy present on the aircraft and configured, when powered, to heat the outer surface of the second inner wall so that any ice that has formed on the second inner annular wall is transformed into a film of water which flows along the second annular wall towards the sound-absorbing tubular wall; a discontinuity element is configured to be provided exclusively between the second inner annular wall and the peripheral side of the sound-absorbing tubular wall and is configured to perform the detachment of the liquid film (F) that flows on the inner annular wall due to the kinetic speed of the airflow sucked by the engine directing the nebulized air particles (G) towards the engine itself.

### .BRIEF DESCRIPTION OF THE DRAWINGS

For a better understanding of the present invention, a preferred embodiment is described below, by way of nonlimiting example, with reference to the accompanying drawings wherein:
Figure 1 is a schematic representation of an engine nacelle having an anti-icing system according to the present invention; and
Figure 2 shows, in a cross-section and enlarged scale, the anti-icing system according to the present invention;
Figures 3 and 4 disclose a variant of the anti-icing system.

### PREFERRED EMBODIMENT

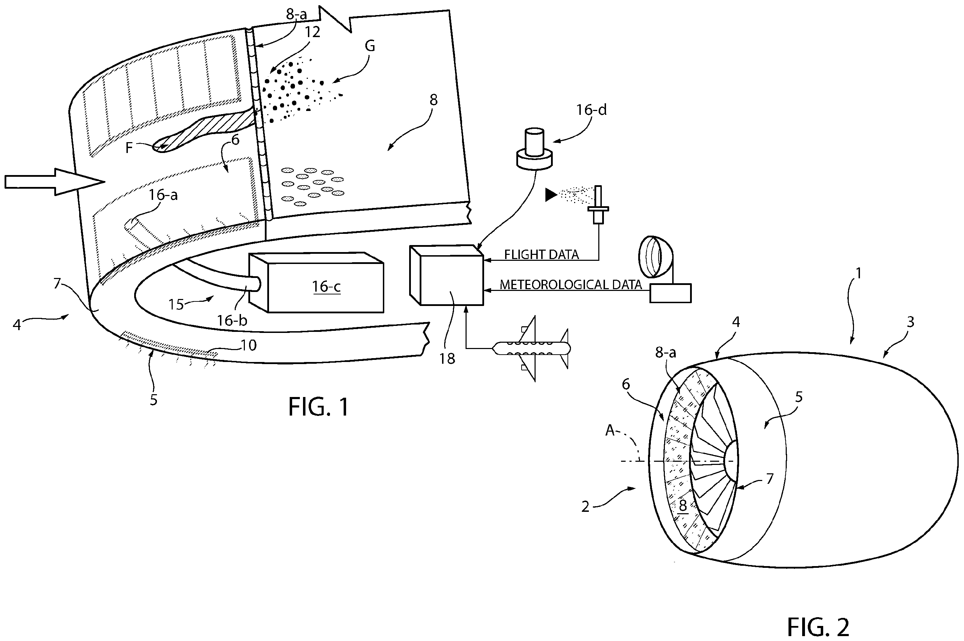

**In** **figure 1,** 1 denotes, as a whole, an anti-icing device for intake opening 2 of the engine nacelle 3 for turbojet or turbofan engines (not shown) wherein the intake opening 2 is delimited at the front by a front annular portion 4 formed by a first outer annular wall 5 facing the outside of the nacelle 3 itself and by a second inner annular wall 6 facing the intake opening (and axis A) of the nacelle itself and connected with the first wall by means of a curved profile 7 having a substantially C-shaped section.

The second inner annular wall 6 is connected by a rear side facing the engine with a peripheral side 8-a of a sound-absorbing tubular wall 8 delimiting part of the suction line 9 of the nacelle 3. In the example the peripheral side 8-a is straight but its shape may be different.

According to the present invention (see figure 2) the anti-icing device 1 comprises a first Joule effect heater device 10 coupled to the first outer wall 5, powered by the electric energy present on the aircraft and configured, when powered, to heat the outer surface of the first outer wall 5 in a predetermined temperature range (e.g. between 7°C ÷ 21°C) causing the ice formed on the first wall 5 to lose adhesion, which is removed due to kinetic effect by the airflow outside of the engine nacelle or falls by gravity during the aircraft landing operations.

The first Joule effect heater device 10 is manufactured using known technologies (e.g. by film resistors) and comprises several heating sectors independent of one another installed angularly around the outer annular wall 5. Each heating sector is divided into several areas for delivering a different amount of thermal energy.

They are provided sensors (not shown) adapted to detect the temperature **Te** of the first outer wall 5.

The anti-icing device 1 comprises a second Joule effect heater device 11 (also of the known type) coupled to the second inner annular wall 6, powered by the electric energy present on the aircraft and configured, when powered, to heat the outer surface of the second inner wall 6 in a predetermined temperature range so that any ice formed on the second outer annular wall 6 is transformed into a film of water F which moves along the second inner annular wall 6 towards the sound-absorbing tubular wall 8. The wall 6 can in turn be of the sound-absorbing type. The sound-absorbing surfaces 6 and 8, of the known type, are, for example, drilled with a pitch between the holes of approximately 3 mm.

The second Joule effect heater device 11 comprises several heating sectors independent of one another installed angularly around the inner annular wall 6. Each heating sector is divided into several areas for delivering a different amount of thermal energy.

They are provided sensors (not shown) adapted to detect the **Ti** temperature of the first internal wall 6.

The first and second heater devices 10 and 11 are both protected by a coating layer that protects them from erosion and impact.

Still according to the present invention exclusively between the second inner annular wall 6 and the peripheral wall 8-a of the sound-absorbing tubular wall 8 a discontinuity element 12 is provided that is configured to perform the detachment of the liquid film F flowing on the inner annular wall 6 by means of the kinetic speed of the airflow sucked by the engine directing the atomized water particles G towards the engine itself.

In the example shown, the discontinuity element consists of an annular groove 13 extending for 360 degrees between facing edges of the inner annular wall 6 and the sound-absorbing tubular wall 8. The water film entering the annular groove 13 performs nebulization thereof.

Alternatively, the discontinuity element may consist of an annular protuberance 13 (not shown) extending for 360 degrees between facing edges of the inner annular wall 6 and the sound-absorbing tubular wall 8.

The sound-absorbing walls 6 and 8 are covered by a hydrophobic/ice phobic lining (of the known type, i.e. of the passive type that does not require external energy other than natural forces, such as gravity, wind or surface tension, to induce water/ice detachment or mitigate accumulation/formation thereof. A hydrophobic/ice phobic lining is generally made from a paint that is applied using known technologies) configured to make any water particles flow towards the rotating parts of the engine.
An ice detection system 15 is provided on the front annular portion 4 comprising a plurality of optical fibres 16 each of which has a first end 16-a which passes through a hole drilled in the front annular portion 4 and is coplanar (flush) with the inner annular wall 6 and a second end 16-b which communicates with a light radiation generator/detector 16-c (such as a laser source) adapted to detect the reflected/refracted radiation from the ice that covers the inner tubular wall 6 and therefore the ends 16-a.

An electronic control device 18 (not necessarily housed in the wing as schematically shown but anywhere in the aircraft) is provided that communicates with the ice detection system 15 and receives the value of Te and Ti temperatures.

The electronic control device 18 also cooperates with other ice detector devices 16-d arranged on the aircraft and is configured to receive flight data of the aircraft, such as speed, altitude, air temperature, pressure, angle of attack, etc. as well as meteorological data (presence of clouds, information about the state of the cloud (water and ice content, temperature, etc.)

The electronic control device 18 controls the first and second Joule effect heater devices 10, 11 to perform an ice removal operation.

The electronic control device 18 is adapted to determine, based on data from the meteorological radar and based on flight data, the type of clouds and information on the state of the clouds (water and ice content, temperature) which the aircraft is going to pass through. Based on the data thus determined, the electronic device 18 is configured to calculate in an open-loop and in real-time the value of the electric energy that the heater device 10 and 11 must supply to obtain a target temperature Te-target, Ti-target for the first outer annular wall 5 and the second inner annular wall 6 which guarantees the elimination of ice. The calculation is carried out knowing the mathematical physical model which represents an input-output model having as input the electric energy absorbed by the first and second Joule effect heaters 10/11 and as output the temperature of the first outer annular wall 5 and of the second outer annular wall 6. The result of the calculation is compared with the one loaded in the database (memory ROM) of the corresponding certifying electronic control device for the flight condition. The value of the electric energy defined by the flight condition loaded in the control unit database (expected) is the value sent to the heater device 10 and 11.

The target temperature Te-target, Ti-target is compared with the temperature Te, Ti measured on the first outer annular wall 5 and on the second outer annular wall 6 and the error between the temperatures is used to control in a closed-loop (e.g. by a PID controller of the known type) the temperature itself in real-time.

In particular, the electronic control device 18 is configured to keep the first heater device 10 switched-off for a time interval following the engine start-up allowing, during the flight of the aircraft, the growth of ice on the external profile up to a certain thickness, and after such time interval has elapsed, the first heater device 10 is switched-on with an ON/OFF type of alternating operation so that a constant temperature is maintained within a regulation interval (ON/OFF De-ice cycling system).

keep the second heater device 11 switched-on continuously following the engine start-up (anti-ice constant ON running wet).
The heater device is controlled by the electronic control device 18 by controlling the voltage or current or resistance.
If a current control is operated, it can be regulated by a law that takes into account the temperature Te or Ti.

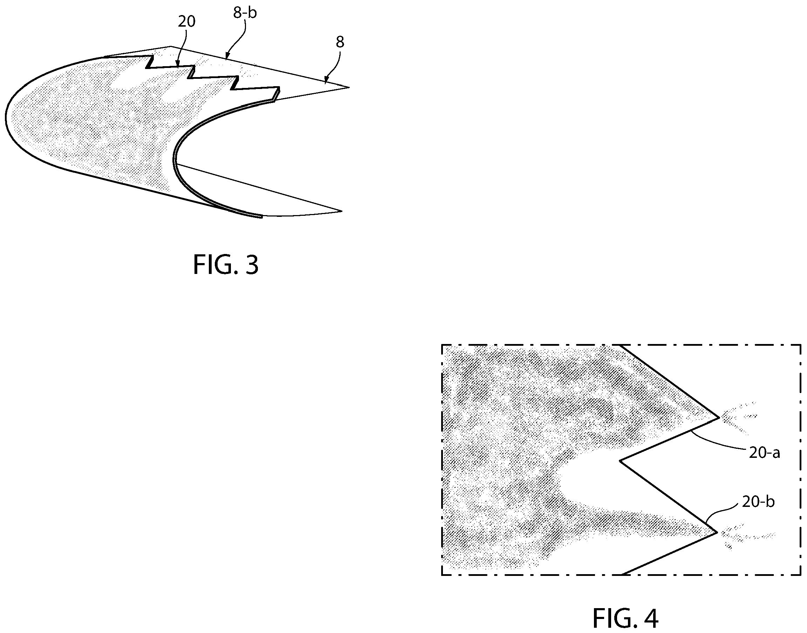

The advantages of the device of the present invention are clear from the foregoing.
Based on numerical modelling and on the tests carried out by the Applicant, it was verified that a synergistic effect is created between the first Joule effect heater device 10, the second Joule effect heater device 11, the discontinuity element 12 and the hydrophobic/phobic ice treatment 8. This synergy helps reduce the power consumption required by the anti-icing system to the aircraft because it decreases the surface area of the engine intake opening exposed to ice formation in known ice flight conditions. The presence of the ice detection system 15 on the front annular portion 4 allows the performance of the anti-icing system to be controlled.
With reference to figure 3 and 4, the discontinuity element 20 is formed by a detachment edge 20 of the second internal annular wall 6 which forms a step with respect to the external surface 8b of the tubular noise-reducing wall 8. The external surface 8-b of the sound-absorbing tubular wall 8 has a radial distance greater than the radial distance of the detachment edge 20. The step improves the detachment of the film of water.
As shown in figures 3 and 4, the detachment edge 20 has a sawtooth pattern and is limited by a plurality of adjacent straight segments 20-a, 20-b which form internal angles varying from 10 to 70 degrees.

### REFERENCE NUMBERS

1 anti-icing device
2 intake opening
3 engine nacelle
4 front annular portion
5 first outer annular wall
6 second inner annular wall
7 curved profile
8 sound-absorbing tubular wall
9 suction line
10 first Joule effect heater device
11 second Joule effect heater device
12 discontinuity element
13 annular groove
14 hydrophobic/ice phobic lining
15 ice detection system
16 optical fibres
16-a first end
16-b second end
17 radiation generator/detector
18 electronic control device

## Claims

1. An anti-icing device (1) for intake opening (2) of nacelle engine (3) for turbojet or turbofan engines wherein the intake opening (2) is delimited at the front by a front annular portion (4) formed by a first outer annular wall (5) facing the outside of the nacelle (3) itself and by a second inner annular wall (6) facing the intake opening of the nacelle itself and connected with the first portion through a curved profile (7), the second inner annular wall (6) being connected by a rear side facing the engine with one peripheral side of a sound-absorbing tubular wall (8) delimiting part of the suction line (9) of the nacelle, said peripheral side is the lateral edge of the tubular wall annularly adjacent to the second inner annular wall, wherein the anti-icing device comprises:
- a first Joule effect heater device (10) configured to be coupled to the first outer annular wall (5), powered by the electric energy present on the aircraft and configured, when powered, to heat the outer surface of the first outer wall (5) causing the ice formed on the first wall (5) to lose its adhesion which is then removed due to kinetic effect by the airflow outside of the nacelle engine or falls by gravity during the aircraft landing operations;
- a second Joule effect heater device (11) configured to be coupled to the second inner annular wall (6), powered by the electric energy present on the aircraft and configured, when powered, to heat the outer surface of the second inner wall (6) so that any ice that has formed on the second inner annular wall (6) is transformed into a film of water which flows along the second annular wall (6) towards the sound-absorbing tubular wall (8);
**characterised in that** a discontinuity element (12) is configured to be provided exclusively between the second inner annular wall (6) and the peripheral side of the sound-absorbing tubular wall (8) and is configured to perform the detachment of the liquid film (F) that flows on the inner annular wall (6) due to the kinetic speed of the airflow sucked by the engine directing the nebulized air particles (G) towards the engine itself.

2. The device according to claim 1, wherein the first Joule effect heater device (10) comprises several heating sectors independent of one another installed angularly around the outer annular wall (5); each heating sector is divided into several areas for delivering a different amount of thermal energy.

3. The device according to claim 1 or 2, wherein the second Joule effect heater device (11) comprises several heating sectors independent of one another configured to be installed angularly around inner annular wall (6); each heating sector is divided into several areas for delivering a different amount of thermal energy.

4. The device according to any one of the preceding claims, wherein the discontinuity element consists of a groove or of an annular protrusion (13) extending between edges facing the inner annular wall (6) and the sound-absorbing tubular wall (8).

5. The device according to any one of the preceding claims, wherein the sound-absorbing tubular wall (8) is covered by a hydrophobic/ice phobic lining configured to cause any water particles to flow towards rotating parts of the engine.

6. The device according to any one of the preceding claims, wherein an electronic control device (18) is provided, configured to determine, based on the data coming from the meteorological radar and based on flight data, the type of clouds and information on the state of the clouds such as, for example, water and ice content, temperature, which the aircraft is going to cross and is going to pass through; based on the data thus determined the electronic device (18) configured to calculate, in an open-loop and in real-time, the value of the electric energy that the first and the second heater devices (10) and (11) must supply to obtain a target temperature Te-target, Ti-target for the first outer annular wall (5) and the second inner annular wall (6) which guarantees the elimination of ice; the result of the calculation is compared with the one loaded in a database (memory ROM) of the corresponding certifying electronic control device for the flight condition; the value of the supply of electric energy defined by the expected flight condition loaded in the database of the control unit is the value sent to the first and to the second heater devices (10 and 11).

7. The device according to claim 6, wherein the electronic control device (18) is configured to compare the target temperature Te-target, Ti-target with the temperature Te, Ti measured on the first outer annular wall (5) and on the second inner annular wall (6); the error between the temperatures is used to control in a closed loop the same temperature in real time.

8. The device according to claim 6 or 7, wherein the electronic control device of the first and second Joule effect heater devices (10, 11) is configured to:
keep the first heater device (10) switched-off for a time interval following engine start-up and after this time interval has elapsed the first heater device (10) is switched-on with an ON/OFF type of alternating operations (ON/OFF De-ice cycling);
keep the second heater device (11) switched-on continuously following the engine start-up (anti-ice constant ON running wet).

9. The device according to any one of the preceding claims, wherein an ice detection system (15) is configured to be provided on the front annular portion (4) comprising a plurality of optical fibres (16) each of which has a first end (16-a) which is configured to pass through a hole drilled in the front annular portion (4) and to be is coplanar (flush) with the inner anular wall (6) and a second end (16-b) which is configured to communicate with a light radiation generator/detector (16-c) designed to detect the reflected/refracted radiation from the ice that covers the inner anular wall (6) and therefore the first ends (16-a).

10. Device according to any one of the preceding claims, in which the discontinuity element (20) is formed by a detachment edge (20) of the second internal annular wall (6) which forms a step with respect to the external surface (8b) of the tubular noise-reducing wall (8); said external surface (8-b) of the sound-absorbing tubular wall (8) having a radial distance greater than the radial distance of said detachment edge (20).

11. A device according to Claim 10, in which the detachment edge (20) has a sawtooth pattern and is limited by a plurality of adjacent straight segments (20-a, 20-b) which form internal angles varying from 10 to 70 degrees.

## Patentansprüche

1. Enteisungsvorrichtung (1) für die Eintrittsöffnung (2) einer Triebwerksgondel (3) für Turbostrahl- oder Turbofantriebwerke, wobei die Eintrittsöffnung (2) an der Vorderseite durch einen ringförmigen Vorderabschnitt (4) begrenzt wird, der durch eine erste ringförmige Außenwand (5), die dem Äußeren der Gondel (3) selbst zugewandt ist, und durch eine zweite ringförmige Innenwand (6), die der Eintrittsöffnung der Gondel selbst zugewandt ist und durch ein gekrümmtes Profil (7) mit dem ersten Abschnitt verbunden ist, ausgebildet wird, wobei die zweite ringförmige Innenwand (6), die durch eine Rückseite, die dem Triebwerk zugewandt ist, mit einer Umfangsseite einer schallabsorbierenden rohrförmigen Wand (8), die einen Teil der Saugleitung (9) der Gondel begrenzt, verbunden ist, ausgebildet wird, wobei die Umfangsseite der seitliche Rand der rohrförmigen Wand ist, die ringförmig an die zweite ringförmige Innenwand angrenzt, wobei die Enteisungsvorrichtung aufweist:
- eine erste Joule-Effekt-Heizvorrichtung (10), die konfiguriert ist, um mit der ersten ringförmigen Außenwand (5) gekoppelt zu werden, die mit der in dem Luftfahrzeug vorhandenen elektrischen Energie betrieben wird und konfiguriert ist, um, wenn sie betrieben wird, die Außenoberfläche der ersten Außenwand (5) zu heizen, was bewirkt, dass das auf der ersten Wand (5) gebildete Eis seine Haftung verliert und dann aufgrund der kinetischen Wirkung durch den Luftstrom außerhalb der Triebwerksgondel entfernt wird oder während des Landungsbetriebs des Luftfahrzeugs aufgrund der Schwerkraft herunterfällt;
- eine zweite Joule-Effekt-Heizvorrichtung (11), die konfiguriert ist, um mit der zweiten ringförmigen Innenwand (6) gekoppelt zu werden, die mit der in dem Luftfahrzeug vorhandenen elektrischen Energie betrieben wird und konfiguriert ist, um, wenn sie betrieben wird, die Außenoberfläche der zweiten Innenwand (6) zu heizen, so dass jegliches Eis, das sich auf der zweiten ringförmigen Innenwand (6) gebildet hat, in eine dünne Wasserschicht umgewandelt wird, die entlang der zweiten ringförmigen Wand (6) in Richtung der schallabsorbierenden rohrförmigen Wand (8) fließt;
**dadurch gekennzeichnet, dass** ein Diskontinuitätselement (12) derart konfiguriert ist, dass es ausschließlich zwischen der zweiten ringförmigen Innenwand (6) und der Umfangsseite der schallabsorbierenden rohrförmigen Wand (8) bereitgestellt ist und konfiguriert ist, um die Ablösung der dünnen Flüssigkeitsschicht (F), die auf der ringförmigen Innenwand (6) fließt, aufgrund der Bewegungsgeschwindigkeit des von dem Triebwerk eingesaugten Luftstroms, der die zerstäubten Luftpartikel (G) in Richtung des Triebwerks selbst lenkt, durchzuführen.

2. Vorrichtung nach Anspruch 1, wobei die erste Joule-Effekt-Heizvorrichtung (10) mehrere Heizabschnitte aufweist, die unabhängig voneinander winkelig um die ringförmige Außenwand (5) herum installiert sind; wobei jeder Heizabschnitt in mehrere Bereiche unterteilt ist, um eine unterschiedliche Menge an Wärmeenergie zu liefern.

3. Vorrichtung nach Anspruch 1 oder 2, wobei die zweite Joule-Effekt-Heizvorrichtung (11) mehrere voneinander unabhängige Heizabschnitte aufweist, die konfiguriert sind, um winkelig um die ringförmige Innenwand (6) herum installiert zu werden; wobei jeder Heizabschnitt in mehrere Bereiche unterteilt ist, um eine unterschiedliche Menge an Wärmeenergie zu liefern.

4. Vorrichtung nach einem der vorhergehenden Ansprüche, wobei das Diskontinuitätselement aus einer Nut oder einem ringförmigen Vorsprung (13) besteht, der sich zwischen Rändern erstreckt, die der ringförmigen Innenwand (6) und der schallabsorbierenden rohrförmigen Wand (8) zugewandt sind.

5. Vorrichtung nach einem der vorhergehenden Ansprüche, wobei die schallabsorbierende rohrförmige Wand (8) mit einer wasserabweisenden/eisabweisenden Beschichtung überzogen ist, um zu bewirken, dass jegliche Wasserpartikel in Richtung rotierender Teile des Triebwerks fließen.

6. Vorrichtung nach einem der vorhergehenden Ansprüche, wobei eine elektronische Steuervorrichtung (18) bereitgestellt ist, die konfiguriert ist, um basierend auf den von dem Wetterradar kommenden Daten und basierend auf Flugdaten die Art von Wolken und Informationen über den Zustand der Wolken, wie etwa zum Beispiel den Wasser- und Eisgehalt, die Temperatur, welche das Luftfahrzeug durchqueren und hindurchgehen wird, zu bestimmen; wobei die elektronische Vorrichtung (18) konfiguriert ist, um basierend auf den auf diese Weise bestimmten Daten in einer offenen Schleife und in Echtzeit den Wert der elektrischen Energie, den die ersten und zweiten Heizungsvorrichtungen (10) und (11) liefern müssen, um eine Zieltemperatur Te-Ziel, Ti-Ziel für die erste ringförmige Außenwand (5) und die zweite ringförmige Innenwand (6), welche die Beseitigung des Eises sicherstellt, zu berechnen; wobei das Ergebnis der Berechnung mit dem verglichen wird, das in eine Datenbank (Speicher-ROM) der entsprechenden elektronischen Zertifizierungssteuervorrichtung für die Flugbedingungen geladen ist; wobei der in die Datenbank der Steuereinheit geladene Wert der elektrischen Energieversorgung, der durch die erwarteten Flugbedingungen definiert wird, der Wert ist, der an die ersten und an die zweiten Heizvorrichtungen (10 und 11) gesendet wird.

7. Vorrichtung nach Anspruch 6, wobei die elektronische Steuervorrichtung (18) konfiguriert ist, um die Zieltemperatur Te-Ziel, Ti-Ziel mit der Temperatur Te, Ti, die auf der ersten ringförmigen Außenwand (5) und auf der zweiten ringförmigen Innenwand (6) gemessen wird, zu vergleichen; wobei der Fehler zwischen den Temperaturen verwendet wird, um die gleiche Temperatur in einer geschlossenen Schleife in Echtzeit zu steuern.

8. Vorrichtung nach Anspruch 6 oder 7, wobei die elektronische Steuervorrichtung der ersten und zweiten Joule-Effekt-Heizvorrichtung (10, 11) konfiguriert ist, um:
die erste Heizvorrichtung (10) eine Zeitspanne lang anschließend an das Starten des Triebwerks ausgeschaltet zu lassen und wobei die erste Heizvorrichtung (10), nachdem diese Zeitspanne vergangen ist, mit einem EIN/AUS-Schalter für den Wechselbetrieb (EIN/AUS der zyklischen Enteisung) eingeschaltet wird;
die zweite Heizvorrichtung (11) anschließend an das Starten des Triebwerks fortlaufend eingeschaltet zu lassen (Enteisen nasslaufend immer an).

9. Vorrichtung nach einem der vorhergehenden Ansprüche, wobei ein Eisdetektionssystem (15) konfiguriert ist, um auf dem ringförmigen Vorderabschnitt (4) bereitgestellt zu werden, wobei es mehrere Glasfasern (16) aufweist, von denen jede ein erstes Ende (16-a), das konfiguriert ist, um durch ein in den ringförmigen Vorderabschnitt (4) gebohrtes Loch zu gehen und mit der ringförmigen Innenwand (6) komplanar (bündig) zu sein, und ein zweites Ende (16-b) hat, das konfiguriert ist, um mit einem Lichtstrahlungsgenerator/Detektor (16c), der konzipiert ist, um reflektierte/gebeugte Strahlung von dem Eis, das die ringförmige Innenwand (6) und daher die ersten Enden (16-a) bedeckt, zu detektieren, in Verbindung zu stehen.

10. Vorrichtung nach einem der vorhergehenden Ansprüche, wobei das Diskontinuitätselement (20) durch eine Ablösekante (20) der zweiten ringförmigen Innenwand (6), die eine Stufe in Bezug auf die Außenoberfläche (8b) der schallabsorbierenden rohrförmigen Wand (8) bildet, gebildet wird; wobei die Außenwandoberfläche (8-b) der schallabsorbierenden rohrförmigen Wand (8) einen radiale Abstand hat, der größer als der radiale Abstand der Ablösekante (20) ist.

11. Vorrichtung nach Anspruch 10, wobei die Ablösekante (20) ein Sägezahnmuster hat und durch mehrere benachbarte gerade Abschnitte (20-a, 20-b), die Innenwinkel im Bereich von 10 bis 70 Grad bilden, begrenzt wird.

## Revendications

1. Dispositif d'antigivrage (1) pour une ouverture d'admission (2) de nacelle de réacteur (3) pour turboréacteurs ou turboréacteurs à double flux, dans lequel l'ouverture d'admission (2) est délimitée à l'avant par une partie annulaire avant (4) formée par une première paroi annulaire externe (5) faisant face à l'extérieur de la nacelle (3) elle-même et par une seconde paroi annulaire interne (6) faisant face à l'ouverture d'admission de la nacelle elle-même et raccordée avec la première partie par un profil courbé (7), la seconde paroi annulaire interne (6) étant raccordée par un côté arrière faisant face au réacteur avec un côté périphérique d'une paroi tubulaire d'absorption de son (8) délimitant une partie de la conduite d'aspiration (9) de la nacelle,
ledit côté périphérique est le bord latéral de la paroi tubulaire annulairement adjacente à la seconde paroi annulaire interne, dans lequel dispositif d'antigivrage comprend :
un premier dispositif de chauffage à effet Joule (10) configuré pour être couplé à la première paroi annulaire externe (5), alimenté par l'énergie électrique présente sur l'aéronef et configuré, lorsqu'il est alimenté, pour chauffer la surface externe de la première paroi externe (5) amenant la glace formée sur la première paroi (5) à perdre son adhérence qui est ensuite retirée en raison de l'effet cinétique par le flux d'air à l'extérieur de la nacelle de réacteur ou tombe par gravité pendant les opérations à terre de l'aéronef ;
un second dispositif de chauffage à effet Joule (11) configuré pour être couplé à la seconde paroi annulaire interne (6), alimenté par l'énergie électrique présente sur l'aéronef et configuré, lorsqu'il est alimenté, pour chauffer la surface externe de la seconde paroi interne (6) de sorte que la glace qui a été formée sur la seconde paroi annulaire interne (6) est transformée en une pellicule d'eau qui s'écoule le long de la seconde paroi annulaire (6) vers la paroi tubulaire d'absorption de son (8) ;
**caractérisé en ce que** :
un élément de discontinuité (12) est configuré pour être exclusivement prévu entre la seconde paroi annulaire interne (6) et le côté périphérique de la paroi tubulaire d'absorption de son (8) et est configuré pour réaliser le détachement de la pellicule de liquide (F) qui s'écoule sur la paroi annulaire interne (6) en raison de la vitesse cinétique du flux d'air aspiré par le réacteur dirigeant les particules d'air nébulisées (G) vers le réacteur lui-même.

2. Dispositif selon la revendication 1, dans lequel le premier dispositif de chauffage à effet Joule (10) comprend plusieurs secteurs chauffants indépendants les uns des autres, installés de manière angulaire autour de la paroi annulaire externe (5) ; chaque secteur chauffant est divisé en plusieurs zones pour distribuer une quantité différente d'énergie thermique.

3. Dispositif selon la revendication 1 ou 2, dans lequel le second dispositif de chauffage à effet Joule (11) comprend plusieurs secteurs chauffants indépendants les uns des autres, configurés pour être installés, de manière angulaire, autour de la paroi annulaire interne (6) ; chaque secteur chauffant est divisé en plusieurs zones pour distribuer une quantité différente d'énergie thermique.

4. Dispositif selon l'une quelconque des revendications précédentes, dans lequel l'élément de discontinuité se compose d'une gorge ou d'une saillie annulaire (13) s'étendant entre des bords faisant face à la paroi annulaire interne (6) et à la paroi tubulaire d'absorption de son (8).

5. Dispositif selon l'une quelconque des revendications précédentes, dans lequel la paroi tubulaire d'absorption de son (8) est couverte par un revêtement hydrophobe/glaciophobe configuré pour amener les particules d'eau à s'écouler vers les parties rotatives du réacteur.

6. Dispositif selon l'une quelconque des revendications précédentes, dans lequel un dispositif électronique de contrôle (18) est prévu, configuré pour déterminer, sur la base des données provenant du radar météorologique et sur la base des données de vol, le type des nuages et les informations sur l'état des nuages, comme par exemple la teneur en eau et en glace, la température, que l'aéronef doit et va traverser ; sur la base des données ainsi déterminées, le dispositif électronique (18) est configuré pour calculer, dans une boucle ouverte et en temps réel, la valeur de l'énergie électrique que le premier et le second dispositif de chauffage (10) et (11) doivent fournir pour obtenir une température cible Te-target, Ti-target pour la première paroi annulaire externe (5) et la seconde paroi annulaire interne (6) qui garantit l'élimination de la glace ; le résultat du calcul est comparé à celui chargé dans une base de données (mémoire ROM) du dispositif électronique de contrôle de certification correspondant pour la condition de vol ; la valeur de la fourniture d'énergie électrique définie par la condition de vol attendue chargée dans la base de données de l'unité de contrôle est la valeur envoyée au premier et au second dispositif de chauffage (10 et 11).

7. Dispositif selon la revendication 6, dans lequel le dispositif électronique de contrôle (18) est configuré pour comparer la température cible Te-target, Ti-target avec la température Te, Ti mesurée sur la première paroi annulaire externe (5) et sur la seconde paroi annulaire interne (6) ; l'erreur entre les températures est utilisée pour contrôler, en boucle fermée, la même température en temps réel.

8. Dispositif selon la revendication 6 ou 7, dans lequel le dispositif électronique de contrôle des premier et second dispositifs de chauffage à effet Joule (10, 11) est configuré pour :
maintenir le premier dispositif de chauffage (10) désactivé pendant un intervalle de temps suivant le démarrage du réacteur et après que cet intervalle de temps s'est écoulé, le premier dispositif de chauffage (10) est activé avec un fonctionnement alternatif de type MARCHE/ARRET (cycle de dégivrage MARCHE/ARRET) ;
maintenir le second dispositif de chauffage (11) activé de manière continue suite au démarrage du réacteur (antigivrage en MARCHE en continu en condition humide).

9. Dispositif selon l'une quelconque des revendications précédentes, dans lequel un système de détection de glace (15) est configuré pour être prévu sur la partie annulaire avant (4) comprenant une pluralité de fibres optiques (16), dont chacune a une première extrémité (16-a) qui est configurée pour passer dans un trou percé dans la partie annulaire avant (4) et pour être coplanaire (à fleur) avec la paroi annulaire interne (6) et une seconde extrémité (16-b) qui est configurée pour communiquer avec un générateur/détecteur de rayonnement lumineux (16-c) conçu pour détecter le rayonnement réfléchi/réfracté de la glace qui couvre la paroi annulaire interne (6) et par conséquent les premières extrémités (16-a).

10. Dispositif selon l'une quelconque des revendications précédentes, dans lequel l'élément de discontinuité (20) est formé par un bord de détachement (20) de la seconde paroi annulaire interne (6) qui forme un gradin par rapport à la surface externe (8b) de la paroi tubulaire de réduction de bruit (8) ; ladite surface externe (8-b) de la paroi tubulaire d'absorption de son (8) ayant une distance radiale supérieure à la distance radiale dudit bord de détachement (20).

11. Dispositif selon la revendication 10, dans lequel le bord de détachement (20) a un motif en dents de scie et est limité par une pluralité de segments droits (20-a, 20-b) adjacents qui forment des angles internes variant de 10 à 70 degrés.
